# EUROPÄISCHE PATENTSCHRIFT

(11) **EP 3 463 938 B1**
(45) Veröffentlichungstag und Bekanntmachung des Hinweises auf die Patenterteilung: **16.12.2020**
(21) Anmeldenummer: 17723349.1
(22) Anmeldetag: 11.05.2017
(51) Int. Cl.: B60G 7/00

(54) **VIERPUNKTLENKER**
FOUR-POINT LINK
BRAS DE SUSPENSION ARTICULÉ EN QUATRE POINTS

(30) Priorität: 24.05.2016 DE 102016209041
(43) Veröffentlichungstag der Anmeldung: 10.04.2019
(73) Patentinhaber: ZF Friedrichshafen AG, 88046 Friedrichshafen (DE); Schäfer MWN GmbH, 71272 Renningen (DE)
(72) Erfinder: MÜLLER, Ingolf, 76872 Minfeld (DE); HEIMANN, Jens, 88719 Stetten (DE); BÜRGMANN, Manfred, 88213 Ravensburg (DE); LOBO CASANOVA, Ignacio, 88677 Markdorf (DE); STIEGLITZ, Andre, 88214 Ravensburg (DE); SOHL, Carsten, 7000 Fredericia (DK); HÖRTDÖRFER, Valentin, 70569 Stuttgart (DE)
(74) Vertreter: ZF Friedrichshafen AG
(86) Internationale Anmeldenummer: PCT/EP2017/061257
(87) Internationale Veröffentlichungsnummer: WO 2017/202614

(56) Entgegenhaltungen:
- EP-A1- 0 023 051
- EP-A1- 1 787 833
- EP-A1- 2 684 714
- EP-A2- 0 283 974
- EP-A2- 2 995 483
- WO-A1-99/09563
- WO-A1-99/09563
- DE-A1-102005 002 515
- DE-A1-102011 079 654
- GB-A- 2 154 520
- US-A- 5 690 034

## Beschreibung

Die Erfindung betrifft einen Vierpunktlenker für eine Radaufhängung eines Fahrzeugs, insbesondere für eine Radaufhängung eines PKW oder NKW. Ferner betrifft die Erfindung auch ein Verfahren zur Herstellung des Vierpunktlenkers.

Vierpunktlenker werden insbesondere in Nutzfahrzeugen verwendet, um eine Starrachse federbar in einem Fahrzeugrahmen zu führen. Der Vierpunktlenker ist dabei für die Querführung und die Längsführung der Achse verantwortlich. Weiterhin erfüllt der Vierpunktlenker die Funktion eines Stabilisators.

Die DE 10 2005 002 515 A1 beschreibt einen Vierpunktlenker gemäß dem Oberbegriff des Anspruches 1. Der Vierpunktlenker wird aus Metall hergestellt.

Aus der EP 1 787 833 A1 ist ein Vierpunktlenker mit einem Torsionselement und zwei Trägerelementen bekannt. Die Trägerelemente verlaufen in Fahrzeuglängsrichtung und weisen jeweils zwei Befestigungsbuchsen auf. Jeweils eine Befestigungsbuchse eines Trägerelements ist in dem Fahrzeugrahmen gelagert. In der jeweils anderen Buchse ist die Starrachse fixiert. Das in Fahrzeugquerrichtung angeordnete Torsionselement verbindet die beiden Trägerelemente miteinander. Hierzu weist das Torsionselement zwei durchgehende Aussparungen auf, die jeweils ein Trägerelement umschließen. Eine Verschwenkung der Trägerelemente gegeneinander führt daher zu einer Torsion des Torsionselements. Die Trägerelemente und das Torsionselement bestehen aus Blech oder Guss und sind miteinander verschweißt.

Ferner geht aus der DE 10 2011 079 654 A1 ein aus einem Faserkunststoffverbundmaterial ausgebildeter Vierpunktlenker hervor. Dieser Vierpunktlenker ist in Integral beziehungsweise Schalenbauweise ausgeführt. Dies macht den Vierpunktlenker sehr leicht, ist aber in Bezug auf eine großserientaugliche Fertigung von Nachteil.

Der Erfindung liegt die Aufgabe zugrunde, einen Vierpunktlenker aus einem Faserkunststoffverbundmaterial für eine Radaufhängung eines Fahrzeugs weiterzuentwickeln, wobei insbesondere die Großserientauglichkeit verbessert und die Herstellungskosten gesenkt werden sollen.

Die Aufgabe wird gelöst durch den Gegenstand von Patentanspruch 1. Bevorzugte Ausführungsformen sind Gegenstand der abhängigen Ansprüche.

Der erfindungsgemäße Vierpunktlenker für eine Radaufhängung eines Fahrzeugs umfasst ein Kernelement, einen Faden sowie vier Buchsen, wobei der Faden mit einem Harz vorimprägniert ist, wobei ferner das Kernelement ein Torsionselement sowie vier mit dem Torsionselement einteilig verbundene Trägerarme aufweist, und wobei an einem jeweiligen distalen Ende des jeweiligen Trägerarms die jeweilige Buchse zur Aufnahme eines jeweiligen Lagerelements angeordnet ist, wobei das Kernelement und die jeweilige Buchse zumindest teilweise mit dem Faden umwickelt sind, um die jeweilige Buchse und den Faden zumindest kraftschlüssig miteinander zu verbinden. Unter einem Faden wird eine Verstärkungsfaser (Filament), ein Faserbündel (Multifilament, Roving) oder ein textil-verarbeitetes Multifilament verstanden.

Unter einer Radaufhängung ist eine Vorrichtung zu verstehen, welche die Räder des Fahrzeugs lenk- und/oder federbar mit einer Karosserie und/oder einem Rahmen des Fahrzeugs koppelt. Bei dem Fahrzeug kann es sich um ein Kraftfahrzeug, insbesondere um ein Nutzkraftfahrzeug, aber auch ein Personenkraftfahrzeug handeln.

Das Kernelement ist im Wesentlichen dazu vorgesehen, die Form des Vierpunktlenkers auszubilden. Mithin ist das Kernelement nicht zur Aufnahme von Lasten vorgesehen sondern ausschließlich zur Ablage bzw. Umwicklung mit dem Faden. Mit anderen Worten werden die Lasten und Kräfte, die durch eine Fahrzeugachse bzw. einen Radträger eingeleitet werden, lediglich von der aus dem Faden gebildeten Außenschale des Vierpunktlenkers aufgenommen. Daher ist der Faden zumindest kraftschlüssig mit den vier Buchsen verbunden. Insbesondere ist der Faden auch formschlüssig mit den vier Buchsen verbunden.

Die vier Trägerarme sind dazu vorgesehen, die Fahrzeugachse bzw. den Radträger mit einem Rahmen und/oder einer Karosserie des Fahrzeugs zu koppeln. Dazu sind zwei Trägerarme gelenkig mit der Fahrzeugachse bzw. dem Radträger verbunden, während die zwei anderen Trägerarme gelenkig mit der Karosserie oder dem Rahmen des Fahrzeugs verbunden sind. Über das Torsionselement sind die Trägerarme miteinander verbunden. Gelenkig bezeichnet hier eine Verdrehbarkeit um mindestens eine Achse. Das Torsionselement dient dazu, die vier Trägerarme gegenüber einer Verschwenkung zu stabilisieren. Die Trägerarme und das Torsionselement sind derart angeordnet, dass eine Verschwenkung des jeweiligen Trägerarms, das heißt eine Verdrehung des jeweiligen Trägerarms um die Torsionsachse, mit einer Torsion des Torsionselements einhergeht. Zu der Torsion kommt es infolge eines Torsionsmoments, welches der jeweilige Trägerarm bei der Verschwenkung auf das Torsionselement ausübt.

Der erfindungsgemäße Vierpunktlenker ermöglicht aufgrund der Herstellung, insbesondere aufgrund der Faserausrichtung beim Wickeln, die Einstellung einer definierten Torsionssteifigkeit bezüglich der Wankstabilisierung, einer hohe Seitensteifigkeit zur Führung der Achse, einer bestimmten Längsnachgiebigkeit bezüglich eines besseren Komfortverhaltens und der Darstellung einer definierten Kinematik bzw. Elastokinematik über den Federweg. Insbesondere ist es möglichst nahezu die gesamte Kinematik durch den Vierpunktlenker selbst abzubilden und somit die in den Buchsen aufgenommenen Lagerelemente, insbesondere Gummilager zu entlasten.

Der Faden bzw. die Fadengruppe besteht vorzugsweise aus einer Vielzahl von Endlosfasern, die durch ein Harz getränkt sind. Unter einer Fadengruppe sind mehrere Fäden zu verstehen, die zu einem Bündel zusammengefasst sind. Dieses Bündel stellt wiederum einen Faden dar. Insbesondere kann der Faden unmittelbar vor dem Wickeln des Kernelements imprägniert werden oder es kann ein mit Harz vorimprägnierter Faden, insbesondere ein sogenanntes TowPreg-Halbzeug oder PrePreg-Faden verwendet werden. Bei dem Nasswickelverfahren, wird der Faden unmittelbar vor dem Wickeln in Harz getränkt und um das Kernelement gewickelt. Eine maximale Ablegegeschwindigkeit des Fadens auf das Kernelement ist aufgrund der Harzverluste, durch beispielsweise Fliehkräfte während des Wickelns, von ca. 0,5 m/s möglich. Demgegenüber kann die Ablegegeschwindigkeit durch die Verwendung der vorimprägnierten Fäden erheblich gesteigert werden, da das Harz ausgetrocknet ist und somit Fliehkräfte keinen Einfluss haben. Mithin ist der Faden aus Faserkunststoffverbundmaterial ausgeformt. Vorzugsweise ist der Faden aus einem carbonfaserverstärkten Kunststoff, einem glasfaserverstärkten Kunststoff, einem aramidfaserverstärkten Kunststoff oder einem anderen geeigneten Faserkunststoffverbundmaterial ausgeformt.

In einer bevorzugten Weiterbildung der Komponente ist der Faden gespannt, das heißt mit einer Kraft beaufschlagt, die eine Spannung des Fadens bewirkt. Infolgedessen ist der Faden kraftschlüssig mit dem jeweiligen Trägerarm und dem Torsionselement verbunden. Der Faden verläuft vorzugsweise derart, dass eine Verschwenkung des jeweiligen Trägerarms durch den Kraftschluss des Fadens mit dem Trägerarm eine auf den Faden wirkende Kraft induziert, die wiederum über den Kraftschluss zwischen dem Faden und dem Torsionselement auf das Torsionselement übertragen wird. Die induzierte Kraft bewirkt dabei eine Vergrößerung der Spannung des Fadens.

Die Erfindung schließt die technische Lehre ein, dass genau ein Faden mehrmals um das Kernelement und die jeweilige Buchse gewickelt ist. Insbesondere wird der Faden automatisiert von einer Wickelachse abgewickelt und mittels eines Roboters systematisch auf das Kernelement aufgewickelt, um den Vierpunktlenker auszubilden. Ferner ist es aber auch denkbar, dass zwei oder mehrere Roboter gleichzeitig das Kernelement mit einem jeweiligen Faden umwickeln, um den Vierpunktlenker auszubilden. Bei Verwendung von mehreren Parallelfäden anstatt eines Einzelfadens wird die Herstellzeit reduziert.

Erfindungsgemäß ist das Kernelement aus einem Schaummaterial ausgebildet. Insbesondere ist das Kernelement aus einem festen, leichten, permanenten Schaummaterial ausgebildet. Vorzugsweise ist das Schaummaterial aus einem Polymer, beispielsweise aus Polyurethan oder Polystyrol ausgebildet. Ferner kann das Kernelement auch als Inliner-Kern, verlorener Kern oder Blaskern ausgebildet sein. Wesentlich ist insbesondere die Fähigkeit des Kernelements mit dem Faden umwickelt zu werden, und somit als Formgeber zu dienen.

Bevorzugt ist die jeweilige Buchse aus einem metallischen Werkstoff ausgebildet. Insbesondere ist die Buchse aus einer Stahllegierung oder einer Leichtmetalllegierung, insbesondere einer Aluminium- oder Magnesiumlegierung ausgebildet. Ferner ist die Buchse zumindest mit dem Kernelement verklebt. Der Kern nimmt die Buchse während des Wickelvorganges derart auf, dass ihre Lage gesichert wird.

Gemäß einem bevorzugten Ausführungsbeispiel ist der Faden an dem jeweiligen Trägerarm im Wesentlichen parallel zu einer jeweiligen Längsachse des jeweiligen Trägerarms geführt. Vorzugsweise ist der Faden radial um den jeweiligen Trägerarm und den damit einteilig verbundenen Torsionselement gewickelt. Insbesondere sind die beiden rahmenseitigen Trägerarme vom Torsionselement derart abgewinkelt, dass sich der Faden in einem kontinuierlichen Wickelprozess auf dem Kernelement ablegen lässt. Die Trägerarme sind im Wesentlichen dazu vorgesehen, eine Biegung aufzunehmen.

Vorzugsweise ist der Faden an einer jeweiligen Stirnfläche des jeweiligen Trägerarms in einem Winkelbereich von 15° bis 45° zu einer jeweiligen Längsachse 7 des jeweiligen Trägerarms 5 geführt. Dies ermöglicht insbesondere die Aufnahme von Schubspannungen, die aus Querkräften generiert werden. Vorzugsweise sind die Trägerarme an der jeweiligen Stirnfläche fachwerkartig mit dem Faden umwickelt. Dadurch wird der jeweilige Trägerarm leichtbauend versteift. Alternativ ist eine vollflächige Umwicklung durch den Faden möglich.

Ferner bevorzugt ist der Faden an dem Torsionselement in einem Winkelbereich von 40° bis 60° zu einer Längsachse des Vierpunktlenkers geführt. Das Torsionselement wird insbesondere durch, aus einer Torsion erwachsenden Schubspannungen belastet. Insbesondere ist die gesamte Oberfläche des Torsionselements mit dem Faden bedeckt, insbesondere mehrmals umwickelt. Vorzugsweise ist die gesamte Oberfläche des Kernelements mit dem Faden bedeckt, insbesondere mehrmals umwickelt.

Erfindungsgemäß weist das Kernelement Aussparungen zur Aufnahme einer Vielzahl von Fadenumwicklungen auf. Mit anderen Worten sind an dem Kernelement einbuchtungsähnliche Aussparungen ausgebildet, die dazu vorgesehen sind, mehrere Fadenlagen aufzunehmen, ohne ungewünschte Materialanhäufungen, insbesondere Materialwülste an der Außenseite des Vierpunktlenkers auszubilden. Ferner ist das Kernelement derart ausgebildet, dass für den Faden insbesondere in Wendepunkten am Kern dafür vorgesehene Ablageflächen geschaffen werden, um den Faden vorteilhaft gestreckt und unter Spannung am Kernelement abzulegen.

Gemäß einem bevorzugten Ausführungsbeispiel ist die jeweilige Buchse zumindest teilweise formschlüssig mit einem jeweiligen Lasteinleitelement verbunden, wobei das jeweilige Lasteinleitelement zumindest kraftschlüssig mit dem Faden verbunden ist. Das jeweilige Lasteinleitelement ist im Wesentlichen dazu vorgesehen, Druckkräfte aufzunehmen, wobei der Faden im Wesentlichen dazu vorgesehen ist Zugkräfte aufzunehmen. Insbesondere ist zwischen dem Lasteinleitelement und der Buchse und/oder zwischen dem Lasteinleitelement und dem Faden eine Klebeschicht ausgebildet, die dazu vorgesehen ist, die Adhäsion zwischen dem Lasteinleitelement und der Buchse bzw. zwischen dem Lasteinleitelement und dem Faden zu erhöhen. Ferner ist es aber auch denkbar die Adhäsion zwischen dem Lasteinleitelement und dem Faden durch eine dazu geeignete Oberflächenbehandlung des Lasteinleitelements oder einem Haftvermittler zu erhöhen. Bevorzugt ist das jeweilige Lasteinleitelement aus einem metallischen Werkstoff ausgebildet. Insbesondere ist das jeweilige Lasteinleitelement aus einer Stahllegierung oder einer Leichtmetalllegierung, insbesondere einer Aluminium- oder Magnesiumlegierung ausgebildet. Ferner ist das jeweilige Lasteinleitelement gießtechnisch, umformtechnisch oder spanend hergestellt. Beispielsweise ist das jeweilige Lasteinleitelement aus einem Blechmaterial hergestellt. Alternativ wird das Lasteinleitungselement aus einem faserverstärkten Kunststoff (bspw. SMC) ausgebildet.

Das erfindungsgemäße Verfahren zur Herstellung des erfindungsgemäßen Vierpunktlenkers umfasst insbesondere die nachfolgenden Verfahrensschritte. Zunächst wird das Kernelement hergestellt, wobei das Kernelement ein Torsionselement sowie vier mit dem Torsionselement einteilig verbundenen Trägerarme aufweist. Danach wird jeweils eine Buchse mit einem jeweiligen distalen Ende des jeweiligen Trägerarms verbunden. Insbesondere wird die jeweilige Buchse an dem jeweiligen distalen Ende des jeweiligen Trägerarms geklebt. Abschließend wird das Kernelement und die jeweilige Buchse zumindest teilweise mit einem vorimprägnierten Faden zur zumindest kraftschlüssigen Verbindung zwischen der jeweiligen Buchse und dem Faden umwickelt. Insbesondere werden das Kernelement und die vier Buchsen derart mit dem Faden umwickelt, dass im Wesentlichen die gesamte Oberfläche des Vierpunktlenkers durch den Faden gebildet ist. Die einzelnen Verfahrensschritte werden bevorzugt in der angegebenen Reihenfolge ausgeführt. Sofern die technischen Gegebenheiten dies zulassen, sind aber auch abweichende Reihenfolgen der Ausführung möglich.

Gemäß einem bevorzugten Ausführungsbeispiel ist das Kernelement an einem Roboterarm aufgenommen, wobei das Kernelement während des Umwickelns mit dem Faden von dem Roboterarm geführt wird. Vorzugsweise ist der Roboterarm dreidimensional beweglich. Insbesondere wird der Faden von einer Wickelachse abgewickelt und um das Kernelement aufgewickelt. Bevorzugt ist der Faden als TowPreg ausgebildet. Gemäß einem alternativen Ausführungsbeispiel ist das Kernelement an einer Achse aufgenommen, wobei der Faden von einem Roboterarm geführt wird, um das Kernelement mit dem Faden zu umwickeln. Insbesondere ist die Achse drehbar gelagert. Alternativ werden eine oder mehrere Veränderungen der feststehenden Wickelachse (Umspannen) im Laufe des Wickelprozesses vorgenommen.

Im Folgenden werden bevorzugte Ausführungsbeispiele der Erfindung anhand der Zeichnungen, in welcher gleiche oder ähnliche Elemente mit dem gleichen Bezugszeichen versehen sind, näher erläutert. Hierbei zeigt
- Fig. 1: eine schematische Draufsicht eines erfindungsgemäßen Vierpunktlenkers,
- Fig. 2: eine schematische Stirnseitenansicht des erfindungsgemäßen Vierpunktlenkers gemäß Fig. 1,
- Fig. 3: eine schematische Draufsicht eines Kernelements mit vier daran angeordneten Buchsen des erfindungsgemäßen Vierpunktlenkers gemäß Fig. 1,
- Fig. 4: eine schematische Seitenansicht des Kernelements gemäß Fig. 3,
- Fig. 5: eine schematische Schnittdarstellung eines teilweise dargestellten erfindungsgemäßen Vierpunktlenkers gemäß einem weiteren Ausführungsbeispiel,
- Fig. 6: eine schematische Darstellung zur Veranschaulichung eines Verfahrens zur Herstellung des erfindungsgemäßen Vierpunktlenkers gemäß Fig. 1, und
- Fig. 7: eine schematische Darstellung zur Veranschaulichung eines weiteren Verfahrens zur Herstellung des erfindungsgemäßen Vierpunktlenkers nach Fig. 1.

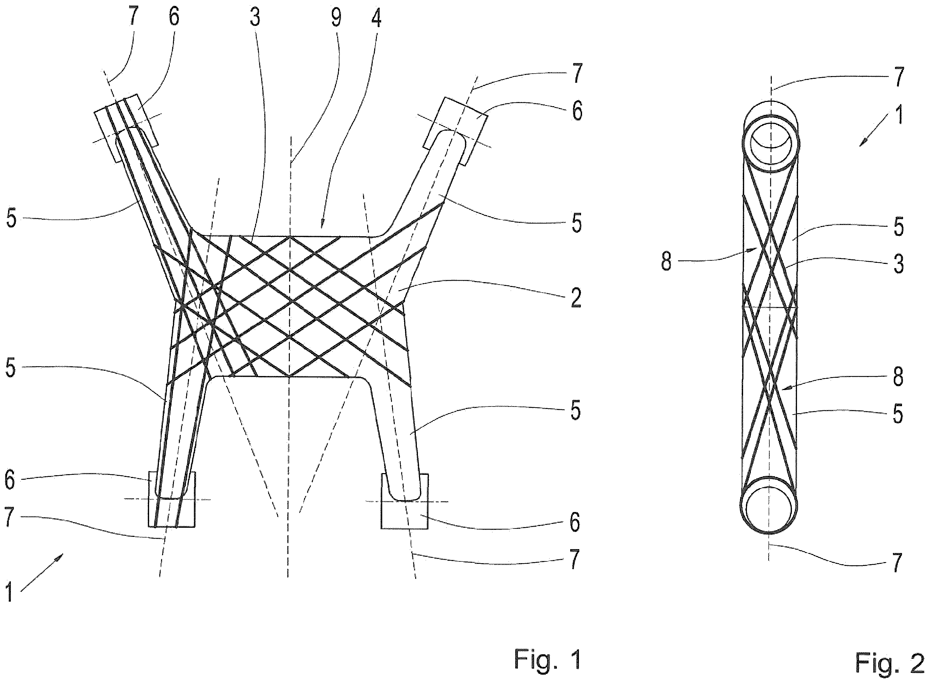

Gemäß Figur 1 umfasst ein erfindungsgemäßer Vierpunktlenker 1 für eine - hier nicht dargestellte - Radaufhängung eines - hier nicht dargestellten - Fahrzeugs ein Kernelement 2, einen Faden 3 sowie vier Buchsen 6. Der Faden 3 ist exemplarisch und stark vereinfacht dargestellt. Insbesondere bildet der Faden 3 im Wesentlichen die gesamte Oberfläche des Vierpunktlenkers 1 aus. Das Kernelement 2 besteht aus einem Torsionselement 4 sowie vier mit dem Torsionselement 4 einteilig verbundene Trägerarme 5. An einem jeweiligen distalen Ende des jeweiligen Trägerarms 5 ist die jeweilige Buchse 6 zur Aufnahme eines jeweiligen - hier nicht dargestellten - Lagerelements, insbesondere Molekulargelenks angeordnet. Der Vierpunktlenker 1 wird beispielsweise in einer Sattelzugmaschine als Fahrwerksanbindung eingesetzt und übernimmt dabei die Aufgaben eines Dreiecklenkers sowie des Stabilisators. Mithin ist der Vierpunktlenker 1 für die Querführung und maßgeblich für die Längsführung der Achse verantwortlich. Ferner wird über den Vierpunktlenker 1 auch die Wankstabilisierung dargestellt.

Dadurch, dass das Kernelement 2 und die jeweilige Buchse 6 zumindest teilweise mit dem Faden 3 umwickelt sind, sind die jeweilige Buchse 6 und der Faden 3 zumindest kraftschlüssig miteinander verbunden. Das Kernelement 2 ist nicht lastführend und dient nur der Formgebung für den Faden 3. Der Faden 3 besteht aus einer Vielzahl von Endlosfasern und ist mit einem Harz vorimprägniert. Demgegenüber ist das Kernelement 2 aus einem Schaummaterial ausgebildet. Ferner ist die jeweilige Buchse 6 aus einem metallischen Werkstoff ausgebildet. Das Kernelement 2, der Faden 3 und die Buchsen 6 weisen eine Quasi-Integralbauweise mit intrinsischer Fügung auf.

Insbesondere ist genau ein Faden 3 mehrmals um das Kernelement 2 und die jeweilige Buchse 6 gewickelt. Der Faden 3 ist dabei an dem jeweiligen Trägerarm 5 im Wesentlichen parallel zu einer jeweiligen Längsachse 7 des jeweiligen Trägerarms 5 geführt, um Biegespannungen aufzunehmen. Ferner ist der Faden 3 an dem Torsionselement 4 in einem Winkel von ca. 40° bis ca. 60°, vorzugsweise 45°, zu einer Längsachse 9 des Vierpunktlenkers 1 geführt, um Schubspannungen aus einer Torsion aufzunehmen.

Figur 2 zeigt den in Figur 1 dargestellten Vierpunktlenker 1 gemäß einer Stirnseitenansicht. Der Faden 3 ist an einer jeweiligen Stirnfläche 8 des jeweiligen Trägerarms 5 in einem Winkel von ca. 20° zu einer jeweiligen Längsachse 7 des jeweiligen Trägerarms 5 geführt, um Schubspannungen aus einer Querkraft aufzunehmen.

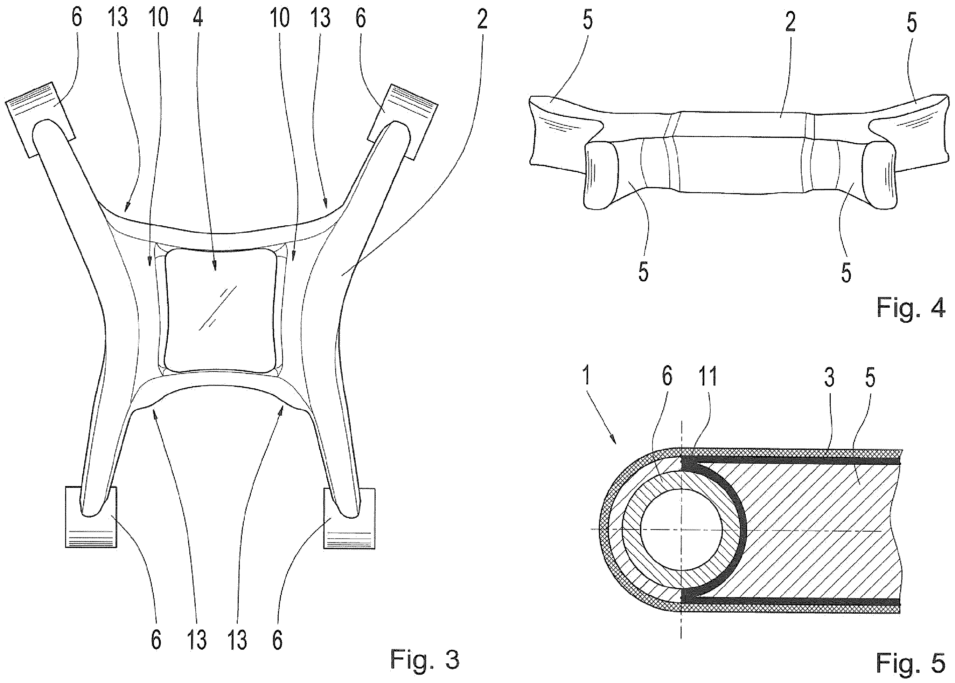

In Figur 3 ist das Kernelement 2 zusammen mit den daran befestigten Buchsen 6 aus Figur 1 dargestellt. Mithin ist das Kernelement 2 vor dem Umwickeln mit dem Faden 3 dargestellt. Das Kernelement 2 weist mehrere, vorzugsweise zwei, Aussparungen 10 zur Aufnahme einer Vielzahl von Fadenumwicklungen auf. Die beiden Aussparungen 10 verringern lokal begrenzt eine Dicke des Torsionselements 4 und vermeiden dadurch eine Materialanhäufung an diesem Bereich an der Außenseite des Torsionselements 4, der zahlreiche Kreuzungspunkte des Fadens 3 aufweisen wird. Des Weiteren sind an dem Torsionselement 4 vier Ablageflächen 13 zur lastgerechten Aufnahme der Wendepunkte des Fadens 3 vorgesehen.

Nach Figur 4 ist das Kernelement 2 aus Figur 3 seitlich dargestellt. Aus Figur 4 geht insbesondere die flache Struktur des Kernelements 2 hervor, die mit einer flachen Struktur des fertigen Vierpunktlagers 1 einhergeht. Dadurch wird Bauraum eingespart. Ferner geht aus Figur 3 hervor, dass das jeweilige distale Ende des jeweiligen Trägerarms 5 zumindest teilweise komplementär zur jeweiligen - in Figur 3 dargestellten - Buchse 6 ausgebildet ist.

Gemäß Figur 5 ist ein weiteres Ausführungsbeispiel des erfindungsgemäßen Vierpunktlenkers 1 geschnitten dargestellt. Insbesondere ist ein distales Ende eines der vier Trägerarme 5 dargestellt. Nachfolgend wird einer der vier Trägerarme 5 beschrieben, jedoch gilt diese Beschreibung auch für die anderen drei Trägerarme 5, die im Wesentlichen identisch dazu ausgebildet sind. Eine am Trägerarm 5 angeordnete Buchse 6 ist zumindest teilweise formschlüssig mit einem Lasteinleitelement 11 verbunden. Insbesondere ist das Lasteinleitelement 11 zumindest teilweise halbkreisförmig ausgebildet, um die Buchse 6 teilweise aufzunehmen. Das Lasteinleitelement 11 ist im Wesentlichen dazu vorgesehen, Druckkräfte aus der Buchse 6 in den radial damit verbundenen Faden 3 einzuleiten. Der Faden 3 und das Lasteinleitelement 11 sind kraftschlüssig miteinander verbunden. Die Lagerbuchse 11 ist aus einem Blechelement ausgebildet.

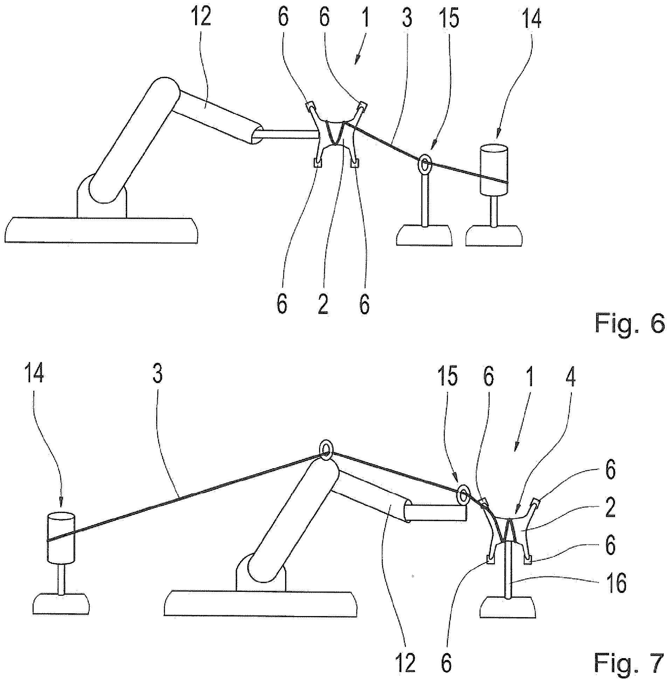

Figur 6 zeigt ein bevorzugtes Verfahren zur Herstellung des erfindungsgemäßen Vierpunktlenkers 1. Das Kernelement 2 mit den vier daran angeordneten Buchsen 6 ist an einem dreidimensional bewegbaren Roboterarm 12 aufgenommen. Ferner ist der vorimprägnierte Faden 3 an einer drehbaren Achse 14 aufgewickelt und wird über ein stationär festgelegtes Führungselement 15 von der Achse 14 abgewickelt und um das Kernelement 2 aufgewickelt. Während des Umwickelns des Kernelements 2 mit dem Faden 3 wird das Kernelement 2 von dem Roboterarm 12 geführt.

Figur 7 zeigt ein weiteres bevorzugtes Verfahren zur Herstellung des erfindungsgemäßen Vierpunktlenkers 1. Das Kernelement 2 mit den vier daran angeordneten Buchsen 6 ist an einer vorzugsweise drehbaren Achse 16 aufgenommen. Ferner ist auch der vorimprägnierte Faden 3 an einer drehbaren Achse 14 aufgewickelt und wird über ein am Roboterarm 12 angeordnetes Führungselement 15 von der Achse 14 abgewickelt und um das Kernelement 2 aufgewickelt. Mithin führt der Roboterarm 12 den Faden 3 über das Führungselement 15, um das Kernelement 2 mit dem Faden 3 zu umwickeln. Zur im Wesentlichen vollflächigen Umwicklung eines am Kernelement 2 ausgebildeten Torsionselements 4 wird das Kernelement 2 zumindest einmal von der Achse 16 abgenommen und umgespannt.

Die Erfindung ist nicht auf die vorhergehenden Ausführungsbeispiele beschränkt. Weitere Weiterbildungsmöglichkeiten sind insbesondere der Beschreibung zu entnehmen.

### Bezugszeichen

- 1: Vierpunktlenker
- 2: Kernelement
- 3: Faden
- 4: Torsionselement
- 5: Trägerarm
- 6: Buchse
- 7: Längsachse eines Trägerarms
- 8: Stirnflächen eines Trägerarms
- 9: Längsachse des Vierpunktlenkers
- 10: Aussparung
- 11: Lasteinleitelement
- 12: Roboterarm
- 13: Ablagefläche
- 14: Achse
- 15: Führungselement
- 16: Achse

## Patentansprüche

1. Vierpunktlenker (1) für eine Radaufhängung eines Fahrzeugs, umfassend ein Kernelement (2), einen Faden (3) sowie vier Buchsen (6), wobei jeder Faden (3) mit einem Harz getränkt oder vorimprägniert ist, wobei ferner das Kernelement (2) ein Torsionselement (4) sowie vier mit dem Torsionselement (4) einteilig verbundene Trägerarme (5) aufweist, und wobei an einem jeweiligen distalen Ende des jeweiligen Trägerarms (5) die jeweilige Buchse (6) zur Aufnahme eines jeweiligen Lagerelements angeordnet ist, **dadurch gekennzeichnet, dass** das Kernelement (2) und die jeweilige Buchse (6) zumindest teilweise mit dem Faden (3) umwickelt sind, um die jeweilige Buchse (6) und den Faden (3) zumindest kraftschlüssig miteinander zu verbinden, wobei das Kernelement (2) aus einem Schaummaterial ausgebildet ist, und dass das Kernelement (2) Aussparungen (10) zur Aufnahme einer Vielzahl von Fadenumwicklungen aufweist, wobei die Aussparungen (10) einbuchtungsähnlich ausgebildet sind, wobei die Aussparungen (10) dazu vorgesehen sind, mehrere Fadenlagen aufzunehmen, ohne ungewünschte Materialanhäufungen, insbesondere Materialwülste an der Außenseite des Vierpunktlenkers (1) auszubilden.

2. Vierpunktlenker (1) nach Anspruch 1, **dadurch gekennzeichnet, dass** genau ein Faden (3) mehrmals um das Kernelement (2) und die jeweilige Buchse (6) gewickelt ist.

3. Vierpunktlenker (1) nach einem der vorherigen Ansprüche, **dadurch gekennzeichnet, dass** die jeweilige Buchse (6) aus einem metallischen Werkstoff oder einem faserverstärkten Kunststoff ausgebildet ist.

4. Vierpunktlenker (1) nach einem der vorherigen Ansprüche, **dadurch gekennzeichnet, dass** der Faden (3) an dem jeweiligen Trägerarm (5) im Wesentlichen parallel zu einer jeweiligen Längsachse (7) des jeweiligen Trägerarms (5) geführt ist.

5. Vierpunktlenker (1) nach einem der vorherigen Ansprüche, **dadurch gekennzeichnet, dass** der Faden (3) an einer jeweiligen Stirnfläche (8) des jeweiligen Trägerarms (5) in einem Winkelbereich von 15° bis 45° zu einer jeweiligen Längsachse (7) des jeweiligen Trägerarms (5) geführt ist.

6. Vierpunktlenker (1) nach einem der vorherigen Ansprüche, **dadurch gekennzeichnet, dass** der Faden (3) an dem Torsionselement (4) in einem Winkelbereich von 40° bis 60° zu einer Längsachse (9) des Vierpunktlenkers (1) geführt ist.

7. Vierpunktlenker (1) nach einem der vorherigen Ansprüche, **dadurch gekennzeichnet, dass** die jeweilige Buchse (6) zumindest teilweise formschlüssig mit einem jeweiligen Lasteinleitelement (11) verbunden ist, wobei das jeweilige Lasteinleitelement (11) zumindest kraftschlüssig mit dem Faden (3) verbunden ist.

8. Verfahren zur Herstellung eines Vierpunktlenkers (1) nach einem der Ansprüche 1 bis 7, **gekennzeichnet durch** folgende Verfahrensschritte:
- Herstellen eines Kernelements (2), wobei das Kernelement (2) ein Torsionselement (4) sowie vier mit dem Torsionselement (4) einteilig verbundene Trägerarme (5) aufweist,
- Verbinden einer jeweiligen Buchse (6) mit einem jeweiligen distalen Ende des jeweiligen Trägerarms (5), und
- Umwickeln des Kernelements (2) und der jeweiligen Buchse (6) zumindest teilweise mit einem vorimprägnierten Faden (3) zur zumindest kraftschlüssigen Verbindung zwischen der jeweiligen Buchse (6) und dem Faden (3).

9. Verfahren nach Anspruch 8, **dadurch gekennzeichnet, dass** das Kernelement (2) an einem Roboterarm (12) aufgenommen ist, wobei das Kernelement (2) während des Umwickelns mit dem Faden (3) von dem Roboterarm (12) geführt wird.

10. Verfahren nach Anspruch 8, **dadurch gekennzeichnet, dass** das Kernelement (2) an einer Achse (16) aufgenommen ist, wobei der Faden (3) von einem Roboterarm (12) geführt wird, um das Kernelement (2) mit dem Faden (3) zu umwickeln.

## Claims

1. Four-point link (1) for a wheel suspension system of a vehicle, comprising a core element (2), a filament (3) and four bushings (6), each filament (3) being impregnated or pre-impregnated with a resin, the core element (2) having, furthermore, a torsion element (4) and four carrier arms (5) which are connected in one piece to the torsion element (4), and the respective bushing (6) for receiving a respective bearing element being arranged at a respective distal end of the respective carrier arm (5), **characterized in that** the core element (2) and the respective bushing (6) are wound around at least partially by way of the filament (3), in order to connect the respective bushing (6) and the filament (3) to one another at least in a non-positive manner, the core element (2) being configured from a foam material, and **in that** the core element (2) has cut-outs (10) for receiving a multiplicity of filament windings, the cut-outs (10) being of indentation-like configuration, the cut-outs (10) being provided to receive a plurality of filament layers, without undesired material accumulations, in particular material beads, being configured on the outer side of the four-point link (1) .

2. Four-point link (1) according to Claim 1, **characterized in that** precisely one filament (3) is wound multiple times around the core element (2) and the respective bushing (6).

3. Four-point link (1) according to either of the preceding claims, **characterized in that** the respective bushing (6) is configured from a metallic material or a fibre-reinforced plastic.

4. Four-point link (1) according to one of the preceding claims, **characterized in that** the filament (3) is routed on the respective carrier arm (5) substantially parallel to a respective longitudinal axis (7) of the respective carrier arm (5).

5. Four-point link (1) according to one of the preceding claims, **characterized in that** the filament (3) is routed on a respective end face (8) of the respective carrier arm (5) in an angular range of from 15° to 45° with respect to a respective longitudinal axis (7) of the respective carrier arm (5).

6. Four-point link (1) according to one of the preceding claims, **characterized in that** the filament (3) is routed on the torsion element (4) in an angular range of from 40° to 60° with respect to a longitudinal axis (9) of the four-point link (1).

7. Four-point link (1) according to one of the preceding claims, **characterized in that** the respective bushing (6) is connected at least partially in a positively locking manner to a respective load introduction element (11), the respective load introduction element (11) being connected at least partially in a non-positive manner to the filament (3).

8. Method for producing a four-point link (1) according to one of Claims 1 to 7, **characterized by** the following method steps:
- producing of a core element (2), the core element (2) having a torsion element (4) and four carrier arms (5) which are connected in one piece to the torsion element (4),
- connecting a respective bushing (6) to a respective distal end of the respective carrier arm (5), and
- winding around of the core element (2) and the respective bushing (6) at least partially by way of a pre-impregnated filament (3) for the at least non-positive connection between the respective bushing (6) and the filament (3).

9. Method according to Claim 8, **characterized in that** the core element (2) is received on a robot arm (12), the core element (2) being guided by the robot arm (12) during the winding around by way of the filament (3).

10. Method according to Claim 8, **characterized in that** the core element (2) is received on a shaft (16), the filament (3) being guided by a robot arm (12), in order to wind around the core element (2) by way of the filament (3) .

## Revendications

1. Bielle à quatre points (1) destinée à une suspension de roue d'un véhicule, ladite bielle comprenant un élément central (2), un fil (3) et quatre douilles (6), chaque fil (3) étant imbibé ou préimprégné avec une résine, l'élément central (2) comportant également un élément de torsion (4) et quatre bras de support (5) reliés d'une seule pièce à l'élément de torsion (4), et la douille respective (6) destinée à recevoir un élément de palier respectif étant disposée à une extrémité distale respective du bras de support respectif (5), **caractérisée en ce que** l'élément central (2) et la douille respective (6) sont au moins partiellement entourés du fil (3) afin de relier au moins en force la douille respective (6) et le fil (3) l'un à l'autre, l'élément central (2) étant formé à partir d'un matériau alvéolaire, et **en ce que** l'élément central (2) comporte des évidements (10) destinés à recevoir une multitude d'enroulements de fil, les évidements (10) étant conçus comme des indentations, les évidements (10) étant prévus pour recevoir une pluralité de couches de fil sans former des accumulations de matériau indésirables, en particulier des billes de matériau du côté extérieur de la bielle à quatre points (1).

2. Bielle à quatre points (1) selon la revendication 1, **caractérisée en ce qu'**exactement un fil (3) est enroulé plusieurs fois autour de l'élément central (2) et de la douille respective (6).

3. Bielle à quatre points (1) selon l'une des revendications précédentes, **caractérisée en ce que** la douille respective (6) est formée à partir d'une matière métallique ou d'une matière synthétique renforcée par des fibres.

4. Bielle à quatre points (1) selon l'une des revendications précédentes, **caractérisée en ce que** le fil (3) est guidé sur le bras de support respectif (5) sensiblement parallèlement à un axe longitudinal respectif (7) du bras de support respectif (5).

5. Bielle à quatre points (1) selon l'une des revendications précédentes, **caractérisée en ce que** le fil (3) est guidé sur une face frontale respective (8) du bras de support respectif (5) dans une plage angulaire de 15° à 45° par rapport à un axe longitudinal respectif (7) du bras de support respectif (5) .

6. Bielle à quatre points (1) selon l'une des revendications précédentes, **caractérisée en ce que** le filetage (3) est guidé sur l'élément de torsion (4) dans une plage angulaire de 40° à 60° par rapport à un axe longitudinal (9) de la bielle à quatre points (1).

7. Bielle à quatre points (1) selon l'une des revendications précédentes, **caractérisée en ce que** la douille respective (6) est au moins partiellement reliée par complémentarité de formes à un élément d'introduction de charge respectif (11), l'élément d'introduction de charge respectif (11) étant au moins relié en force au fil (3).

8. Procédé de réalisation d'une bielle à quatre points (1) selon l'une des revendications 1 à 7, **caractérisé par** les étapes suivantes :
- réaliser un élément central (2), l'élément central (2) comportant un élément de torsion (4) et quatre bras de support (5) qui sont reliés d'une seule pièce à l'élément de torsion (4),
- relier une douille respective (6) à une extrémité distale respective du bras de support respectif (5), et
- entourer l'élément central (2) et la douille respective (6) au moins partiellement avec un fil préimprégné (3) pour établir au moins une liaison en force entre la douille respective (6) et le fil (3).

9. Procédé selon la revendication 8, **caractérisé en ce que** l'élément central (2) est reçu sur un bras de robot (12), l'élément central (2) étant guidé par le bras de robot (12) pendant l'enroulement du fil (3).

10. Procédé selon la revendication 8, **caractérisé en ce que** l'élément central (2) est reçu sur un axe (16), le fil (3) étant guidé par un bras de robot (12) afin d'entourer l'élément central (2) avec le fil (3).
